# EUROPÄISCHE PATENTSCHRIFT

(11) **EP 3 130 071 B1**
(45) Veröffentlichungstag und Bekanntmachung des Hinweises auf die Patenterteilung: **09.06.2021**
(21) Anmeldenummer: 15725483.0
(22) Anmeldetag: 07.04.2015
(51) Int. Cl.: H02M 1/32, H02M 7/483, H02M 7/48, H02M 7/493

(54) **ELEKTRISCHES ENERGIESPEICHERSYSTEM**
ELECTRICAL ENERGY STORAGE SYSTEM
SYSTÈME DE STOCKAGE D'ÉNERGIE ÉLECTRIQUE

(30) Priorität: 07.04.2014 DE 202014002953 U
(43) Veröffentlichungstag der Anmeldung: 15.02.2017
(73) Patentinhaber: Dr. Ing. h.c. F. Porsche AG, 70435 Stuttgart (DE)
(72) Erfinder: GOETZ, Stefan, 85659 Forstern (DE)
(86) Internationale Anmeldenummer: PCT/DE2015/000175
(87) Internationale Veröffentlichungsnummer: WO 2015/154743

(56) Entgegenhaltungen:
- WO-A1-2012/136252
- WO-A2-2012/072168
- WO-A2-2012/089395
- DE-A1-102010 041 077

## Beschreibung

Bei der vorliegenden Erfindung handelt es sich um eine Vorrichtung für elektrische Stromversorgungen und elektrische Energiespeichersysteme. Während konventionelle Energiespeichersysteme, beispielsweise Batterien, sehr limitierte elektrische Eigenschaften liefern, beispielsweise Gleichspannung mit einer vom Batteriedesign und dem Ladungszustand vorgegebenen Spannung, kann die Erfindung innerhalb bestimmter Grenzen, beispielsweise einer Maximalspannung und einem Maximalstrom, nahezu beliebige Strom- und Spannungsverläufe, beispielsweise in Sinusform, bereitstellen, ohne eine separate leistungselektronische Umrichterschaltung zu benötigen. Gleichzeitig kann die Erfindung nicht nur Energie in nahezu beliebiger Form abgeben sondern auch aufnehmen und seine integrierten elektrischen Energiespeicher, beispielsweise Kondensatoren, Batterien, Akkumulatoren und dergleichen unter Einhaltung vorgegebener Ladeeigenschaften, beispielsweise bestimmten zeitlichen Stromverläufen, Spannungsverläufen, oder Leistungsverläufen (beispielsweise konstant, ansteigend mit einem bestimmten Verlauf oder abfallend mit einem bestimmten Verlauf) aufladen.

WO 2012/136252 A1 beschreibt ein Verfahren und einen Spannungsquellenwandler zum Unterstützen eines zugehörigen Wechselstromsystems, wobei der Wandler eine Wechselstromseite, welche mit einer Wechselstromleitung des Wechselstromsystems verbunden ist, und eine Gleichstromseite aufweist, welche mit einer Gleichstromleitung eines Gleichstrom-Übertragungssystems verbunden ist und mit einer Gruppe von Phasenzweigen zwischen zwei Gleichstrompolen zum Anschluss eines Gleichstromübertragungssystems parallel verbunden ist. Die Phasenzweige umfassen weiterhin Zellen, welche miteinander verkettet verbunden sind, wobei jede Zelle Schaltelemente parallel zu einem Zellenkondensator und einige der Zellen zusätzlich eine Batteriemodulgruppe aufweist, welche parallel zu dem Zellenkondensator anschließbar ist. Dabei werden die Schaltelemente der Zellen zur Umwandlung von Wechselstrom und Gleichstrom oder vice versa gesteuert und die Batteriemodulgruppen einer Anzahl von Zellen parallel mit entsprechenden Zellenkondensatoren zum Austausch von Leistungen mit dem dazugehörigen Wechselstromsystem selektiv verbunden.

Bestehende Systeme aus dem Stand der Technik, beispielsweise der modulare Multilevelconverter M2C (US 7,269,037; DE 101 03 031), der modulare Multilevelconverter M2SPC (WO 2012 072197; DE 102010 052934; WO 2012 072168; WO 2012072197; EP 2011 0179321; DE 2010 1052934; WO 2013 017186; DE 10 2011 108920) sowie diverse Modifikationen (beispielsweise US 13/990,463; US 14/235,812; DE 10 2010 008978; DE 102009 057288; US 3,581,212) können zwar ähnlich der vorliegenden Erfindung einzelne elektrische Energiespeicher dynamisch miteinander kombinieren, um eine Energieabgabe oder Energieaufnahme mit nahezu beliebigen Strom und Spannungseigenschaften an den Anschlüssen des Systems zu ermöglichen. Allerdings muss bei diesen bekannten Lösungen jeder elektrische Energiespeicher in ein eigenes Modul implementiert werden. Die elektrischen Schalter der untereinander elektrisch verbundenen Module erlauben durch geeignete Aktivierung, die elektrische Verschaltung der in die jeweiligen Module integrierte elektrischen Energiespeicher dynamisch zu verändern, beispielsweise zwischen elektrisch serieller Verschaltung der elektrischen Energiespeicher unterschiedlicher Module, elektrisch paralleler Verschaltung der elektrischen Energiespeicher unterschiedlicher Module oder einer Umgehung (einem sogenannten Bypass) der elektrischen Energiespeicher mindestens eines Moduls, wodurch der Strom durch geeignete Aktivierung der elektrischen Schalter um den elektrischen Energiespeicher herumgeleitet wird, dass dieser nicht in den Stromkreis eingebunden ist und somit zumindest zeitweise weder geladen noch entladen wird. Ein korrekter Betrieb kann jedoch jedes Modul nur einen elektrischen Energiespeicher enthalten. Eine Kombination mehrerer elektrischer Energiespeicher in einem Modul kann keine Ungleichheiten in den einzelnen elektrischen Energiespeichern korrigieren, die beispielsweise durch Alterungsprozesse oder durch Fertigungstoleranzen entstehen. Ferner können auch nicht unterschiedliche elektrische Energiespeicher, beispielsweise eine Batterie und ein Kondensator, in ein Modul integriert werden. Die Notwendigkeit für jeden einzelnen elektrischen Energiespeicher ein eigenes Modul vorzusehen verursacht hohe Kosten aufgrund der notwendigen zusätzlichen elektronischen Bauelementen, wie beispielsweise Transistoren und galvanisch trennenden beispielsweise optischen Übertragern, und benötigt eine komplizierte Ansteuerung aufgrund der hohen Zahl von zu steuerbaren elektrischen Schaltern. Ferner muss eine hohe Anzahl von Messdetektoren, beispielsweise für die Modulspannung und/oder den Modulstrom, in das System integriert werden.

Die vorliegende Erfindung behebt diesen Mangel durch eine geeignete Schaltung, die als Microtopologie für M2C-, M2SPC- und ähnliche Schaltungen verwendet werden kann.

### Figuren

**Figur 1** zeigt eine Makrotopologie des M2SPC aus dem Stand der Technik. Die Makrotopologie des M2SPC beschreibt die Verschaltung einzelner Module, die wiederum durch die Microtopologie definiert werden.

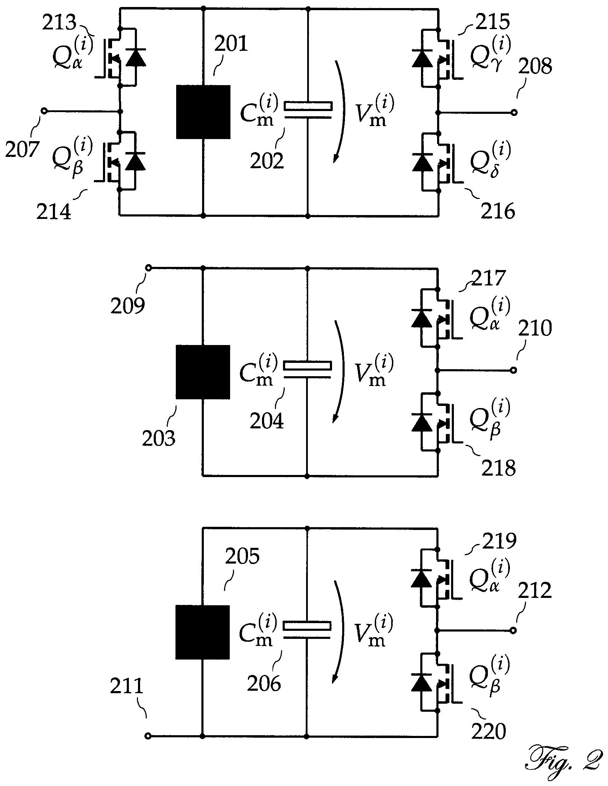

**Figur 2** zeigt drei beispielhafte Microtopologien, folglich Modultopologien der M2C-Technologie aus dem Stand der Technik. Elektrische Energiespeicher oder Modulspeicher (202, 204, 206) sind in ein von elektronischen Schaltern mit zwei Modulterminals (207, 208), (209, 210) und (211, 212) so verschaltet, dass der Modulspeicher (202, 204, 206) in mehreren Zuständen in unterschiedlicher Weise mit den zwei Modulterminals (207, 208), (209, 210) und (211, 212) elektrisch leitend verbunden werden kann. Alle drei dargestellten Module verfügen mindestens über einen Bypass-Zustand und einen Seriell-Zustand. Im Bypass-Zustand wird der Strom über die elektrischen Schalter von einem Modulterminal (207, 209, 211) zum zweiten (208, 210, 212) so am elektrischen Modulspeicher (202, 204, 206) vorbeigeleitet, dass nur maximal einer der beiden Anschlüsse des elektrischen Modulspeichers mit irgendeinem der Modulterminals elektrisch leitend verbunden ist, während der andere Anschluss des elektrischen Modulspeichers (202, 204, 206) durch die elektrischen Schalter von den Modulterminals getrennt ist, sodass der elektrische Modulspeicher nicht an einem Stromkreis mit den Modulterminals teilnimmt und weder entladen noch aufgeladen wird. Im Seriell-Zustand wird der eine der beiden Anschlüsse des elektrischen Modulspeichers (202, 204, 206) durch die elektrischen Schalter mit einem der beiden Modulterminals (207, 208), (209, 210) und (211, 212) elektrisch leitend verbunden; ferner wird der andere der beiden Anschlüsse des elektrischen Modulspeichers (202, 204, 206) mit dem anderen der beiden Modulterminals (207, 208), (209, 210) und (211 , 212) elektrisch leitend verbunden. Dadurch ist der elektrische Modulspeicher im Seriell-Zustand elektrisch leitend zwischen die beiden Modulterminals geschaltet und wird durch den fließenden Strom entweder geladen oder entladen. Die Spannung zwischen den beiden Modulterrninals entspricht dabei der Spannung des elektrischen Modulspeichers. Neben dem elektrischen Modulspeicher können die Module weitere elektrische Elemente enthalten, wie hier durch schwarze Kästen (201, 202, 203) angedeutet ist.
Figur 3 zeigt drei beispielhafte Microtopologien der M2SPC-Technologie. Diese Module weisen neben den bereits genannten Zuständen ferner mindestens einen Parallelzustand auf, der ermöglicht, die elektrischen Modulspeicher zweier unterschiedlicher Module mit geeigneter Aktivierung der elektrischen Schalter der Module miteinander elektrisch parallel zu schalten.
Figur 4 zeigt eine beispielhafte Verschaltung von M2SPC-Modulen zu einem Converter-Arm.

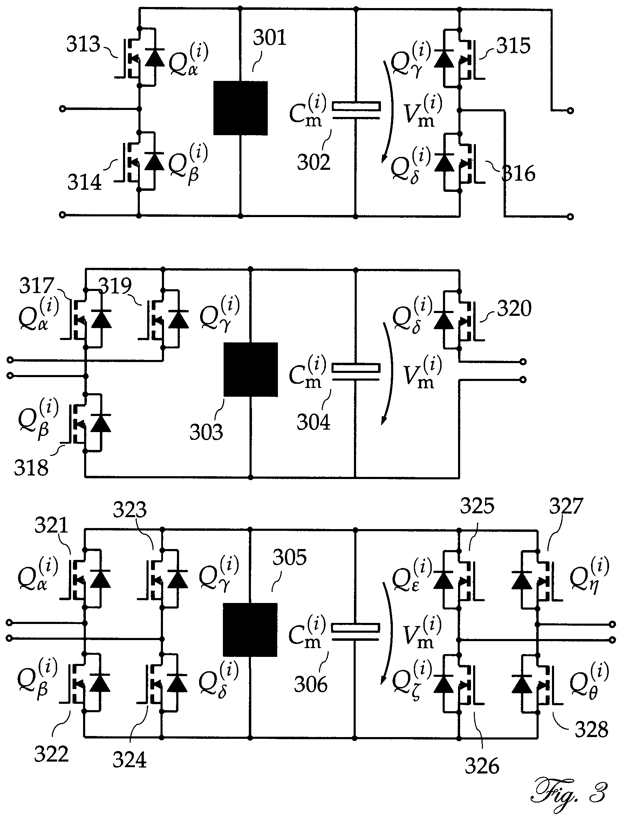

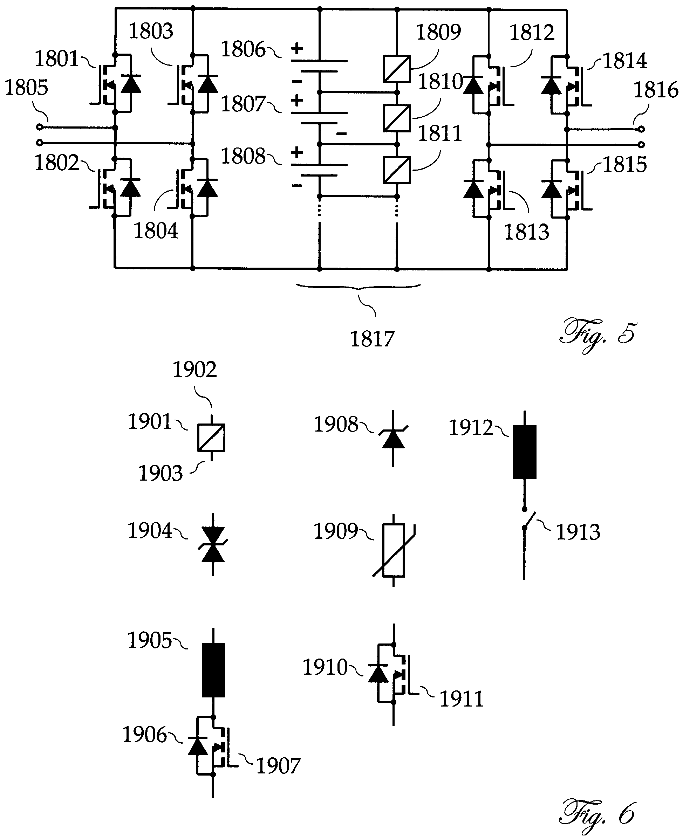

Figur 5 zeigt eine Ausführungsform der Erfindung. Beispielhaft wurde eines der M2SPC-Module aus Figur 3 als Ausgangsbasis gewählt. Der elektrische Energiespeicher (302) wird hier durch eine elektrische Speichereinheit (1817) ersetzt, die aus mindestens zwei Einzelspeichern (1806, 1807, 1808) und zugehörigen Korrekturelementen (1809, 1810, 1811) besteht. Die elektrische Speichereinheit (1817) kann in andere Modultopologien wie beispielsweise jene aus US 7,269,037; DE 101 03 031; WO 2012 072197; DE 102010 052934; WO 2012 072168; WO 2012 072197; EP 2011 0179321; DE 2010 1052934; WO 2013 017186; DE 102011 108920; US 13/990,463; US 14/235,812; DE 102010 008978; DE 102009 057288; US 3,581,212 integriert werden.
Figur 6 zeigt Implementierungen der Korrekturelemente (1809, 1810, 1811, 1901). Eine Korrektureinheit enthält mindestens zwei elektrische Anschlüsse (1902, 1903) und erlaubt kontrollierten Stromfluss bei erfüllen bestimmter Bedingungen.
Figur 7 zeigt weitere Implementierungen für Korrekturelemente (1809, 1810, 1811, 1901, 2001, 2005, 2010, 2016, 2022).
Figur 8 zeigt eine besondere Ausführungsform der Erfindung mit mindestens einer Korrektureinheit (2116), die mindestens zwei Korrekturelemente umfasst.
Figur 9 zeigt eine weitere besondere Ausführungsform der Erfindung mit mindestens einer Korrektureinheit (2216), die mindestens zwei Korrekturelemente und mindestens zwei Spannungssensoren umfasst, wobei mindestens zwei der Korrekturelemente mit jeweils unterschiedlichen elektrischen Energiespeichern elektrisch parallel verbunden sind.
Figur 10 stellt ein Modul einer besonderen Ausführungsform der Erfindung mit einer alternativen Korrektureinheit (2336) dar.
Figur 11 zeigt ein Modul einer besonderen Ausführungsform der Erfindung mit alternativen Korrektureinheiten (2431 - 2442), die maximale Flexibilität bietet.
Figur 12 zeigt ein Modul einer weiteren besonderen Ausführungsform der Erfindung.
Figur 13 zeigt ein Modul einer besonderen Ausführungsform der Erfindung mit verringerter Anzahl an alternativen Korrektureinheiten (2631, 2636, 2639).
**Figur 14** zeigt ein Modul einer besonderen Ausführungsform der Erfindung mit bidirektionellen elektrischen Schaltern.

### Ausführliche Beschreibung und Ausführungsformen

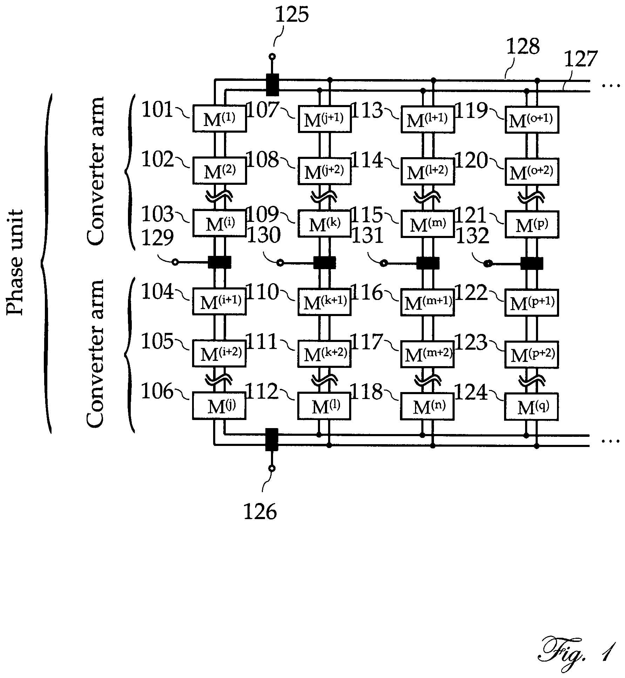

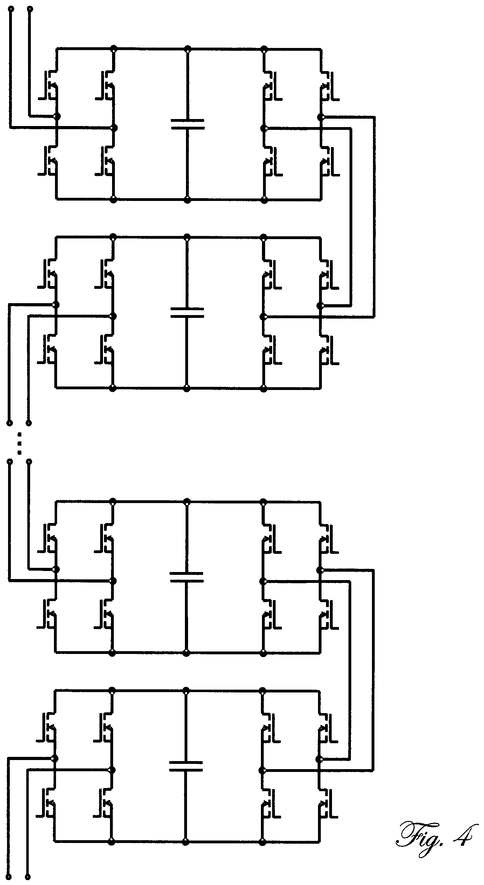

Die vorliegende Erfindung besteht aus einer Zusammenschaltung von Modulen, deren elektrische Schaltung durch die sogenannte Microtopologie beschrieben wird. Diese Diese Module werden in der Macrotopologie zu größeren Einheiten zusammengeschaltet. Beispiele für Macrotopologien sind die sogenannte Marquardt-Topologie (siehe z. B. US 7,269,037 und S. Goetz, A. Peterchev, T. Weyh (2015). Modular Multilevel Converter With Series and Parallel Module Connectivity: Topology and Control. IEEE Transactions on Power Electronics, 30(1):203-215.), die für die M2SPC-Schaltung in Figur 1 dargestellt ist, oder ein einfacher sogenannter Converter-Arm, der aus der Zusammenschaltung von mindestens zwei Modulen entsteht. Module werden dabei in der Regel so in Serie geschaltet, dass ein Teil der Modulanschlüsse eines Moduls mit einem Teil der Modulanschlüsse eines weiteren Moduls elektrisch leitend verbunden werden (siehe beispielsweise Figur 4). Ohne Einschränkung des Konzepts stellt Figur 4 eine Makrotopologie dar, bei der Module über deren Modulanschlüsse zu einer Kette verbunden sind; folglich ist jedes Modul außer den beiden randständigen mit exakt zwei anderen Modulen verbunden. Während diese in der Lage ist beliebige Spannungsformen zwischen den Enden der Kette zu erzeugen, können auch beliebige andere Makrotopologien durch geeignete elektrische Verbindung von Modulanschlüssen erzeugt werden. Vorteilhaft ist eine Makrotopologie, bei der alle möglichen Paare von zwei Modulen entweder unmittelbar elektrisch miteinander verbunden sind oder jeweils mit demselben Aggregat von Modulen und somit mittelbar elektrisch verbunden sind. In einer Makrotpologie können auch unterschiedliche Modultypen, also Module unterschiedlicher Microtopologien, kombiniert werden. Jedoch sollten die kombinierten Module mindestens zwei gemeinsame Zustände aufweisen. Der Zustand der Module determiniert wie die zugehörigen elektrischen Energiespeicher oder elektrische Energiespeichereinheiten unterschiedlicher Module durch geeignete Aktivierung der zugehörigen elektrischen Schalter der Module miteinander elektrisch verbunden sind.
Die elektrische Verschaltung von mehreren elektrischen Energiespeichern oder elektrischen Energiespeichereinheiten mithilfe geeigneter Aktivierung der elektrischen Schalter in den zugehörigen Modulen elektrische in Serie, elektrisch parallel, elektrisch bypass oder dergleichen, wird als Konnektivität bezeichnet. Durch die Verwendung schneller elektrischer Schalter kann die Konnektivität dynamisch sehr schnell verändert werden. Vorzugsweise kann eine dynamische Änderung der Konnektivität schneller als eine Millisekunde erfolgen, besonders vorteilhaft ist die Erfindung, wenn eine dynamische Änderung der Konnektivität in weniger als 5 µs erfolgt.

Im Folgenden umfasse der Begriff elektrischer Energiespeicher auch elektrische Energiespeichereinheiten.

Durch die Änderung der Konnektivität mehrerer miteinander elektrisch verschalteter Module, beispielsweise in einer Marquardt-Topologie (siehe Fig. 1) oder auch eines einfachen Stranges (oft als Converter-Arm bezeichnet, bei dem Anschlüsse für eine externe elektrische Systeme wie Lasten, Quellen oder elektrische Netze zumeist an den beiden Enden des Stranges vorliegen) kann die Spannung an den Anschlüssen (in Fig. 1 (125, 126, 129, 130, 131, 132)) dynamisch beliebig eingestellt werden. Die Einstellung der Spannung kann in Stufen erfolgen, die den Modulspannungen, also der von den elektrischen Energiespeichern der Module bereitgestellten Spannung, entsprechen; ferner können durch schnelles Wechseln zwischen mehreren derartigen Stufen auch feine Zwischenniveaus in der Spannung an den Anschlüssen erzeugt werden.
Wie bereits dargelegt wurde, kann das System Ladung zwischen den elektrischen Energiespeichereinheiten unterschiedlicher Module austauschen, um beispielsweise einen Ladungsausgleich, Energieumrichtung oder Energieumformung, und eine bestimmte Lastverteilung innerhalb aller elektrischen Energiespeichereinheiten und/oder elektrischen Energiespeicher zu ermöglichen. Die Erfindung bietet ferner die Möglichkeit zur dynamischen Rekonfigurierung der elektrischen Energiespeichereinheiten und/oder elektrischen Energiespeicher in eine Mischung aus Serien- und, abhängig von der verwendeten Microtopologie, in eine Parallelverschaltung. Wegen der relativ hohen Innenwiderstände vieler elektrischer Energiespeicher und deren begrenzte Dynamik ist der Parallelzustand eine besonders vorteilhafte Eigenschaft zur Verteilung einer elektrischen Last auf mehrere Module oder elektrische Energiespeicher und zum Ausgleich des Ladungszustandes mehrerer einzelner Zellen, um die Gesamteffizienz des Systems zu erhöhen.

Ein paralleler Zustand, folglich eine mögliche parallele Konnektivität zwischen elektrischen Energiespeichern und/oder elektrischen Energiespeichereinheiten, kann weiter zwei Vorteile haben. Er erhöht die Strombelastbarkeit des Systems durch Verringerung des effektiven Innenwiderstandes. Zusätzlich bietet der parallele Zustand eine Methode zum Ausgleich der Ladung einzelner Module ohne die Notwendigkeit, elektrische Parameter, wie beispielsweise die Modulspannung, zu messen und zu überwachen. Da die Erfindung keine genaue Information über den Ladungszufluss und Ladungsabfluss in den Modulen benötigt, kann es einen ausgeglichenen Zustand des Systems sogar ohne geschlossene Regelschleife in einer open-loop-Steuerung bieten und beispielsweise die Ladungsüberwachung im gesamten System vereinfachen.

Unter besonderen Bedingungen ist es vorteilhaft mehr als einen elektrischen Energiespeicher in ein einzelnes Modul zu integrieren. Vorteilhafter Weise können diese mehreren elektrischen Energiespeicher elektrisch in Serie geschaltet werden, um eine gemeinsame höhere Spannung als ein einzelner elektrischer Energiespeicher zu erzeugen. Ferner kann es vorteilhaft sein, wenn die einzelnen dabei in einem Modul kombinierten elektrischen Energiespeicher nicht gleichen Typs sind oder in ihrem Betriebsverhalten oder ihren Eigenschaften (Spannung, Kapazität, verträgliche Maximalspannung, Temperatur) zumindest geringfügig voneinander abweichen. Diese geringfügige Abweichung ist bereits durch mindestens 5% Abweichung der einzelnen in einem Modul kombinierten elektrischen Energiespeicher in einem der genannten Parameter voneinander gegeben. Vorteilhafterweise ist eine geringfügige Abweichung bei 10% Abweichung der einzelnen in einem Modul kombinierten elektrischen Energiespeicher in einem der genannten Parameter gegeben. Ein Gegenüber Lösungen aus dem Stand der Technik spart die vorliegende Erfindung Bauelemente sowie Module, vereinfacht die Steuerung und verringert die Verluste, die bei einer hohen Zahl von einzelnen Modulen in der Ansteuerung der Module und der galvanisch getrennten Übertragung von Signalen von und zu den Modulen entstehen.

In Figur 5 ist ein beispielhaftes Modul gemäß der Erfindung dargestellt. Es enthält mehrere elektrische Energiespeicher (1806, 1807, 1808), die jeweils elektrisch parallel mit einem zugehörigen Korrekturelement (1809, 1810, 1811) verbunden sind. Mehrere paarweise Einheiten aus elektrischen Energiespeicher und zugehörigem Korrekturelement sind elektrisch in Serie geschaltet und bilden eine elektrische Speichereinheit (1817). In einer elektrischen Energiespeichereinheit (1817) müssen die einzelnen elektrischen Energiespeicher nicht ausschließlich in Serie geschaltet sein. Jeder einzelne elektrische Energiespeicher kann auch durch weitere elektrische Energiespeicher, die elektrisch zu ersterem parallel geschaltet sind, verstärkt werden. Wie bereits dargelegt kann die elektrische Energiespeichereinheit (1817) auch mit anderen Microtopologien, beispielsweise jenen aus den Figuren 2 und 3, gemäß der Erfindung kombiniert werden. Die elektrische Energiespeichereinheit ersetzt oder ergänzt dabei den elektrischen Energiespeicher, beispielsweise (202, 204, 206, 302, 304, 306), in der Microtopologie.

Ferner können auch mehrere gleichartige oder unterschiedliche elektrische Energiespeichereinheiten miteinander elektrisch parallel oder elektrisch seriell geschaltet und anschließend in ein Modul integriert werden. Die entstehende Kombination von elektrischen Energiespeichereinheiten ist wiederum eine elektrische Energiespeichereinheit im Sinne der Erfindung.

Eine typische Anforderung an ein Korrekturelement ist das Abführen von Ladung, auch Ableiten genannt, von dazu parallel geschalteten elektrischen Energiespeichern, um Spannungsstress auf einen elektrischen Energiespeicher zu verringern, indem beispielsweise die Spitzenspannung, die je über die Anschlüsse des elektrischen Energiespeichers auftreten, unterhalb einer vorgegebenen Grenze gehalten werden, und/oder um die elektrische Last eines elektrischen Energiespeichers zu begrenzen und/oder um die Temperatur eines elektrischen Energiespeichers zu begrenzen. Die Steuerung oder Regelung eines Korrekturelements kann von einer gesonderten elektronischen Steuereinheit bewerkstelligt werden, die ein Signal für einen oder mehrere elektrische Schalter in dem Korrekturelement und/oder steuerbare Impedanzen in dem Korrekturelement liefert; ferner kann die Steuerung oder Regelung eines Korrekturelements auch passiv erfolgen, das heißt, dass keine gesonderte elektrische Steuereinheit benötigt wird, sondern dass physikalische oder chemische Eigenschaften eines oder mehrerer Elemente des Korrekturelements, beispielsweise eine bestimmte Temperatur- oder Spannungsabhängigkeit eines Widerstandes, einer Impedanz, oder eines Halbleiters, zu einer Steuerung oder Regelung des Korrekturelements führen.

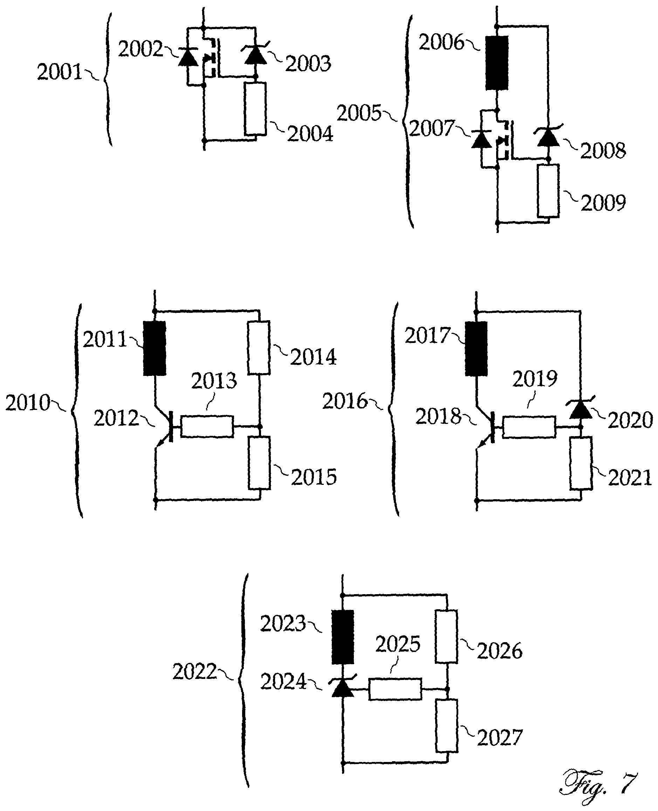

Die Korrekturelemente (1809, 1810, 1811) können beispielsweise wie in den Figuren 6 und 7 dargestellt implementiert werden. Korrekturelemente können elektrische Zweipole mit elektrischen Anschlüssen (1902) und (1903) sein. Für eine Spannungslimitierung mit gleichzeitiger Ladungsentnahme können beispielsweise die folgenden elektrischen Elemente genutzt werden:
(a) Zener-Dioden (1908) und elektrisch ähnliche Elemente mit einem niedrigen Widerstand für Spannungen über einer bestimmten Grenze;
(b) Suppressor-Dioden (1904);
(c) Spannungs-abhängige (gewöhnlich nichtlinear) komplexe Impedanzen (d. h. mit resistivem und/oder reaktiven Anteilen) (1905);
(d) Arrestoren (1909) oder andere Spannungs- oder Temperatur-abhängige Impedanzen, die resistive und/oder reaktive Anteile enthalten können;
(e) elektrische Schalter oder steuerbare Impedanzen (unter anderem Relais, Feld-Effekt-Transistoren, Bipolartransistoren und andere steuerbare Widerstände) (1911);
(f) elektrische Schalter oder steuerbare Impedanzen kombiniert mit komplexen Impedanzen (1912, 1913), die resistive und/oder reaktive Anteile haben und nichtlinear sein können.

Beispiele für steuerbare Impedanzen sind elektrische Schalter und Halbleiterelemente, die nicht als Schalter (d. h. mit lediglich zwei Zuständen: einem geschlossenen, elektrisch gut leitenden [weniger als 1 Ω effektiver Widerstand, vorteilhaft weniger als 0.1 Ω effektiver Widerstand] und einem offenen; elektrisch schlecht leitenden [größer als 1000 Ω effektiver Widerstand; vorteilhafter Weise wenigstens 1000'000 Ω effektiver Widerstand] Zustand) sondern in deren Widerstandsbereich dazwischen betrieben werden, oder Schalter, die zwischen mehreren Widerständen oder Impedanzen umschalten, und steuerbare Zener-Dioden (sogenannte *adjustable Zener diodes).*
Für Lösungen, die einen elektrischen Schalter oder eine steuerbare Impedanz (1911, 1912/1913) beinhalten, kann eine Steuereinheit ein Steuersignal bereitstellen und/oder eine closed-loop-Regelung oder open-loop-Steuerung durchführen.

Passive Lösungen, d. h. insbesondere Lösungen, die keine separate Mess-, Überwachungs- und/oder Steuereinheit benötigen, haben wichtige Vorteile, reduzieren Kosten und begrenzen die Komplexität. Figur 7 zeigt einige Ausführungsformen, die Schalter oder steuerbare Impedanzen zusammen mit Mitteln implementieren, die diese steuern und beispielsweise die Spannung eines oder mehrer bestimmter Energiespeicher als Teil einer Energiespeichereinheit begrenzen können. Eine Spannungsbegrenzung (2001) kann als Schalter oder steuerbare Impedanz, hier als Feld-Effekt-Transistor (2002), Widerstand (2004) sowie einer Zener-Diode (alternativ auch Voltage-Suppressor, Arrestor oder dergleichen) (2003) dargestellt, implementiert werden. Die Gate-Spannung des Transistors wird von einer Spannung Vₛ kontrolliert, die um eine bestimmte Spannungsstufe, die durch das Element (2003) festgelegt ist, kleiner ist als die Spannung des dem Korrekturelement zugehörigen Energiespeichers. Durch geeignete Auswahl der Schwellenspannung Vₜ des Transistors und der Durchbruchspannung des Elementes (2003) Vₛ kann die maximale Spannung des Energiespeichers auf etwa Vₜ + Vₛ begrenzt werden. Eine Freilaufdiode antiparallel zum Schalter oder steuerbarer Impedanz (20029 kann Spannungsspitzen aufgrund reaktiver Ströme unterbinden.

Element (2003) kann ebenfalls durch einen traditionellen Widerstand ersetzt werden. Ferner kann eine Impedanz (2006) in den Strompfad des elektrischen Schalters oder der steuerbaren Impedanz (2007) eingefügt werden, wie in (2005) dargestellt. In (2010) und (2016) ist der elektrische Schalter oder die steuerbare Impedanz als Bipolartransistor (2012, 2018) ausgeführt; in (2022) ist der elektrische Schalter oder die steuerbare Impedanz als steuerbare Zener-Diode (auch als *adjustable Zener Diode* bezeichnet) (2024), die Änderungen ihrer Durchbruchspannung durch mindestens einen Steuereingang erlaubt und von mehreren Herstellern kommerziell angeboten wird, ausgeführt.

Die Impedanzen (2006, 2011, 2017, 2023) sind optional und können nahe oder gleich null sein. Ebenso können Gate-, Basis- und ähnliche Eingangs-Widerstände (2013, 2019, 2025) nahe oder gleich null sein.

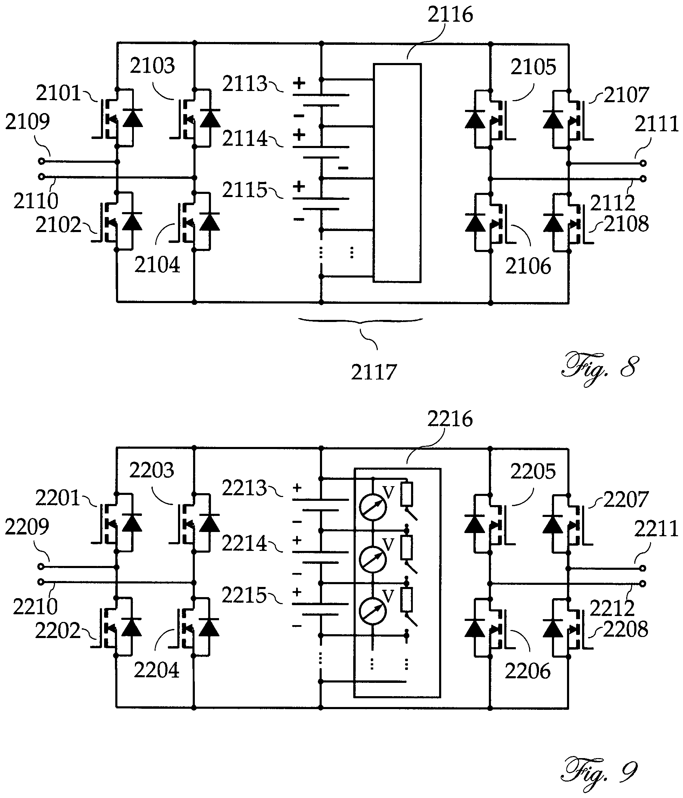

Die Korrekturelemente mindestens zweier elektrischer Energiespeicher (2113, 2114, 2115; 2213, 2214, 2215) desselben Moduls, die jeweils beispielsweise mindestens einen Transistor und vorzugsweise ferner jeweils mindestens eine Impedanz umfassen, können zusammen eine Korrektureinheit (2116; 2216) formen (siehe beispielsweise Figs. 8 and 9). Vorzugsweise umfasst eine Korrektureinheit ferner mindestens zwei Spannungssensoren (siehe Fig. 9). Ein solcher Spannungssensor kann sowohl die Spannung eines einzelnen elektrischen Energiespeichers als auch eine elektrische Kombination, beispielsweise in Serie oder parallel, mehrerer elektrischer Energiespeicher messen. Die mindestens zwei Spannungssensoren können ferner auch als einzelner Spannungssensor mit Multiplexer ausgeformt werden. Eine solche Kombination von Multiplexer und Sensor wird aufgrund des ähnlichen Verhaltens im Sinne dieser Erfindung als mehrere Sensoren interpretiert. In einer besonderen Ausführungsform der Erfindung sind zu jeweils mindestens zwei elektrischen Energiespeichern mindestens zweier Module mindestens je eine Korrektureinheit und mindestens je ein Spannungssensor elektrisch parallel verbunden. In einer anderen Ausführungsform der Erfindung umfasst eine Korrektureinheit mindestens einen Stromsensor, der den Strom misst, der in oder aus mindestens einem elektrischen Energiespeicher des zugehörigen Moduls fließt.

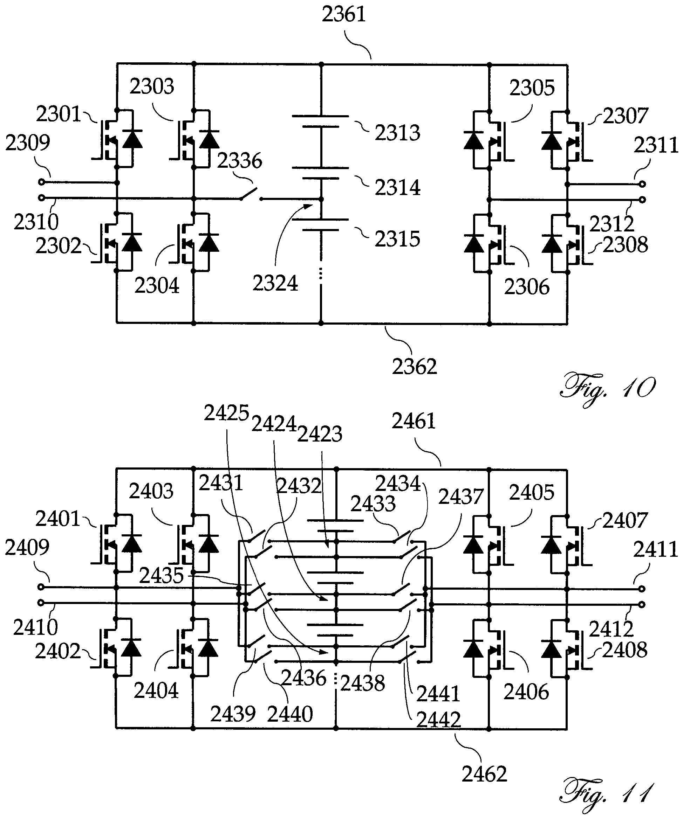

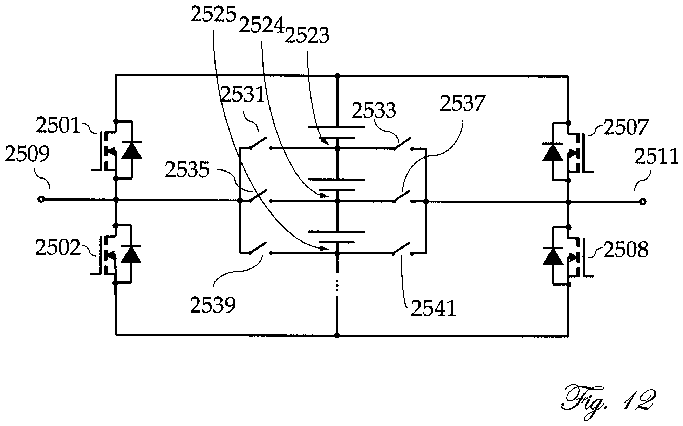

Wie Figur 10 darstellt, kann ein Korrekturelement alternativ einen elektrischen Schalter (2336) umfassen, der bei Aktivierung einen Verbindungsknoten (2324) mindestens zweier elektrischer Energiespeicher (2314, 2315) elektrisch leitend mit einem Modulterminal (2310) verbindet. Auf diese Weise können die elektrischen Energiespeicher zwischen dem genannten Verbindungsknoten (2324) und der positiven Modulsammelschiene (2361) und die elektrischen Energiespeicher zwischen dem genannten Verbindungsknoten (2324) und der negativen Modulsammelschiene (2362) unterschiedlich stark entladen oder aufgeladen werden, indem der durch den oder die Modulterminals fließenden Strom, der beispielsweise von einem anderen Modul oder einer elektrischen Last stammt, teilweise oder vollumfänglich über den elektrischen Schalter (2336) in oder aus dem genannten Verbindungsknoten (2324) geleitet oder entnommen wird. Somit lassen sich unterschiedliche Ladungszustände und ebenfalls eingangs genannte physikalische und/oder chemische Unterschiede der in ein Modul integrierter elektrischen Energiespeicher ausgleichen.
Wie in Fig. 11 beispielhaft für ein Modul mit vier Modulterminals (2409, 2410, 2411, 2412) gezeigt, können die Korrekturelemente so ausgeführt sein, dass jeder Verbindungsknoten (2423, 2424, 2425) mindestens zweier elektrischer Energiespeicher, der nicht unmittelbar mit einer positiven Modulsammelschiene (2461) oder negativen Modulsammelschiene (2462) identisch ist, über je mindestens einen elektrischen Schalter (2431 - 2442) mit jedem der Modulterminals (2409 - 2412) zumindest zeitweise elektrisch leitend verbunden werden. Für ein Modul mit lediglich zwei Modulterminals (2509, 2511) für diesen Fall ist wie in Fig. 12 gezeigt entsprechend eine geringere Anzahl von elektrischen Schaltern (2531, 2533, 2535, 2537, 2539, 2541) notwendig, für eine höhere Anzahl an Modulterminals steigt die Zahl entsprechend, wie der Fachmann erkennen kann.
Der Erfinder hat ferner erkannt, dass die Bereitstellung je eines dezidierten elektrischen Schalters zwischen jedem Verbindungsknoten mindestens zweier elektrischer Energiespeicher, der nicht zugleich einer Sammelschiene entspricht, und jedem Modulterminal zwar umfassende Flexibilität bietet, jedoch nicht notwendig ist, um eine unabhängige Ladung und Entladung der elektrischen Energiespeicher eines Moduls sicherzustellen. Aus oben beschriebenen Varianten, die umfassende schaltbare elektrische Verbindungen von Verbindungsknoten mit Modulterminals bereitstellen, lassen sich zum Teil mehr als die Hälfte aller elektrischen Schalter einsparen.
Bevorzugt sind Ausführungsformen, in welchen jeder Verbindungsknoten mindestens zweier elektrischer Energiespeicher, der nicht zugleich einer Sammelschiene entspricht - welche selbst bereits über einen elektrischen Schalter zumindest zeitweise mit einem Modulterminal elektrisch leitend verbunden werden kann - über mindestens einen elektrischen Schalter zumindest zeitweise mit mindestens einem beliebigen Modulterminal elektrisch leitend verbunden werden kann.
Um eine hohe Anzahl von Schaltern zu vermeiden, kann auch nur ein Teil der Verbindungsknoten mindestens zweier elektrischer Energiespeicher über elektrische Schalter mit mindestens einem Modulterminal elektrisch leitend verbunden werden.

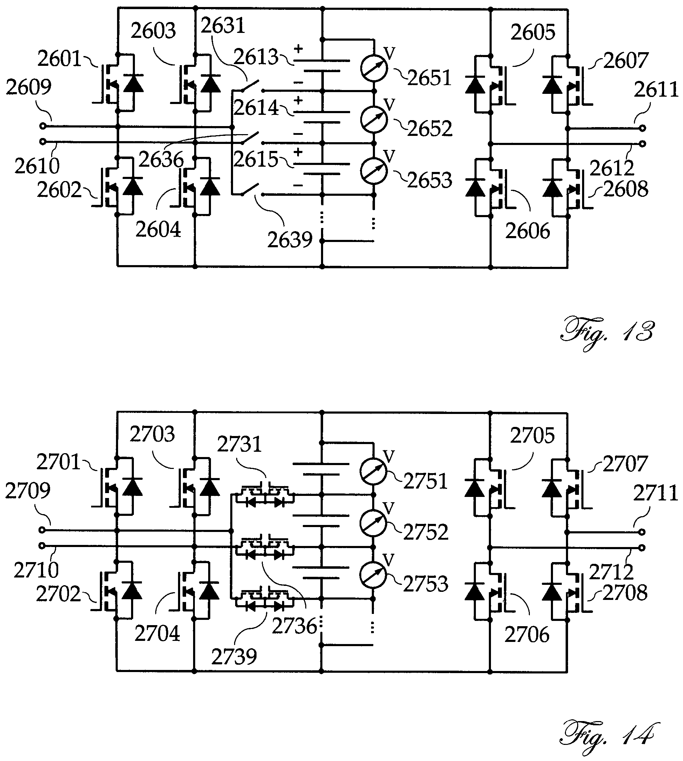

Figur 13 stellt eine zufällig gewählte Ausführungsform dar, bei der mindestens dreier, vorzugsweise jeder Verbindungsknoten mindestens zweier elektrischer Energiespeicher (2613, 2614, 2615) über mindestens einen elektrischen Schalter (2631, 2636, 2639) mit mindestens einem Modulterminal (2609, 2610) zumindest zeitweise elektrisch leitend verbunden werden kann. In Figur 13 verbinden die elektrischen Schalter beispielhaft zur Verdeutlichung der Flexibilität hinsichtlich möglicher Kombinationen zwei der drei dargestellten Verbindungsknoten mit unterschiedlichen Modulterminals (2609, 2610). Ferner kann mindestens ein elektrischer Energiespeicher (2613, 2614, 2615) über je mindestens einen Spannungssensor (2651, 2652, 2653) verfügen. Vorzugsweise ist mindestens ein Spannungssensor elektrisch parallel zu jedem elektrischen Energiespeicher eines Moduls verbunden. Ein solcher Spannungssensor kann sowohl die Spannung eines einzelnen elektrischen Energiespeichers als auch eine elektrische Kombination, beispielsweise in Serie oder parallel, mehrerer elektrischer Energiespeicher messen. Da nur sehr geringe Ausgleichströme über die genannten elektrischen Schalter zwischen den Verbindungsknoten mindestens zweier elektrischer Energiespeicher und mindestens einem Modulterminal fließen müssen, können die elektrischen Schalter sehr kostengünstig ausgeführt werden. Mit steigender Schaltgeschwindigkeit und dem damit verbundenen schnellen Ausgleich ungleichmäßiger Entladung oder Ladung von elektrischen Energiespeichern kann die Stromtragfähigkeit der genannten elektrischen Schalter weiter verringert werden. Die nötige Spannungsfestigkeit der genannten elektrischen Schalter ist, je nach Anschlussort des Schalters an einen Verbindungsknoten mindestens zweier elektrischer Energiespeicher, geringer als die Modulspannung. Beispielsweise ist die höchste Spannung, die ein elektrischer Schalter zwischen dem mittleren Verbindungsknoten aus einer elektrisch seriellen Verschaltung von vier elektrischen Energiespeichern gleicher Spannung und einem Modulterminal lediglich etwa die halbe Modulspannung.
Die elektrischen Schalter zwischen Verbindungsknoten mindestens zweier elektrischer Energiespeicher und Modulterminals können als mechanische elektrische Schalter ausgeführt sein. Bevorzugter Weise sind die genannten Schalter Halbleiterschalter, die neben einfachem Aktivieren und Deaktivieren der elektrischen Leitung auch Schaltmodulation, beispielsweise Pulsweitenmodulation (PWM), zur Regelung von Spannung oder Stromfluss und damit trotz hoher Lastströme an den Modulterminals einen geringen Ausgleichsstrom zum Ausgleich unterschiedlicher Ladung oder Entladung der elektrischen Energiespeicher ermöglichen. Insbesondere Halbleiterschalter können sowohl als Schalter implementiert sein, die Strom lediglich unidirektional schalten, als auch als solche, die Strom auch bidirektional schalten können. Figur 14 stellt beispielhaft drei elektrische Schalter (2731, 2736, 2739) dar, die bidirektional Strom zu schalten vermögen. Bidirektionale Schalter bieten den Vorteil, dass Strom in beiden Richtungen und somit sowohl im Quellenbetrieb als auch im Ladebetrieb der elektrischen Energiespeicher des Moduls kontrolliert werden kann.

Eine Kombination von Korrekturelementen, die elektrische Schalter umfassen, die zeitweise Verbindungsknoten mindestens zweier elektrischer Energiespeicher und mindestens einem Modulterminal elektrisch leitend verbinden können (siehe Figuren 10 - 14), und Korrekturelementen, die parallel zu einzelnen elektrischen Energiespeichern oder zu einer, beispielsweise seriellen oder parallelen, Kombination mehrerer elektrischer Energiespeicher angeordnet sind (siehe Figuren 5 - 9), können außerordentliche Vorteile haben. Beispielsweise sind erstere Korrekturelemente in der Lage einzelne elektrische Energiespeicher stärker als andere zu laden, können aber je nach eingesetzten Bauelementen höhere Produktionskosten erzeugen, während letztere Korrekturelemente vor allem eine Entladung erzwingen können und derzeit preisgünstig herstellbar sind. Eine Kombination kann die Vorteile beider kombinieren.

Eine Ausführungsform der Erfindung beinhaltet mehrere ähnlichartige elektrisch miteinander verbundene Module (101 - 124), die jeweils mindestens einen elektrischen Energiespeicher (202, 204, 206, 302, 304, 306) oder mindestens eine elektrische Energiespeichereinheit (1817) und mindestens einen elektrischen Schalter (213 - 317, 318 - 328; 1801, 1802, 1803, 1804, 1812, 1813, 1814, 1815) aufweisen, derart beschaffen, dass
mindestens ein Modul (101 - 124) eine elektrische Energiespeichereinheit (1817) aufweist, die mindestens zwei in elektrisch Serie geschaltete elektrische Energiespeicher (1806, 1807, 1808) aufweist, wobei jeder dieser elektrischen Energiespeicher (1806, 1807, 1808) ein elektrisch parallel geschaltetes Korrekturelement (1809, 1810, 1811) aufweist, das in der Lage ist, elektrische Ladung aus dem jeweils elektrisch parallel geschalteten elektrischen Energiespeicher (1806, 1807, 1808) abzuleiten und/oder hineinzuleiten,
wobei die mehreren Module als ähnlichartig gelten, wenn diese durch geeignete Aktivierung des jeweils mindestens einen elektrischen Schalters (213 - 317, 318 - 328; 1801, 1802, 1803, 1804, 1812, 1813, 1814, 1815) mindestens zwei der folgenden drei Zustände darstellen können:
der mindestens eine elektrische Energiespeicher (202, 204, 206, 302, 304, 306) oder die mindestens eine elektrische Energiespeichereinheit (1817) eines Moduls wird mit dem mindestens einen elektrischen Energiespeicher (202, 204, 206, 302, 304, 306) oder der mindestens einen elektrischen Energiespeichereinheit (1817) eines weiteren Moduls in Serie geschaltet;
der mindestens eine elektrische Energiespeicher (202, 204, 206, 302, 304, 306) oder die mindestens eine elektrische Energiespeichereinheit (1817) eines Moduls wird mit dem mindestens einen elektrischen Energiespeicher (202, 204, 206, 302, 304, 306) oder der mindestens einen elektrischen Energiespeichereinheit (1817) eines weiteren Moduls parallel geschaltet;
der mindestens eine elektrische Energiespeicher (202, 204, 206, 302, 304, 306) oder die mindestens eine elektrische Energiespeichereinheit (1817) eines Moduls wird derart gebypasst, dass der mindestens eine elektrische Energiespeicher (202, 204, 206, 302, 304, 306) oder die mindestens eine elektrische Energiespeichereinheit (1817) eines Moduls nur mit maximal einem seiner mindestens zwei elektrischen Kontakte mit mindestens einem elektrischen Energiespeicher (202, 204, 206, 302, 304, 306) oder mindestens einer elektrischen Energiespeichereinheit (1817) eines weiteren Moduls elektrisch leitend verbunden ist und kein geschlossener Stromkreis mit mindestens einem elektrischen Energiespeicher (202, 204, 206, 302, 304, 306) oder mindestens einer elektrischen Energiespeichereinheit (1817) eines weiteren Moduls vorliegt.

Eine alternative Ausführungsform der Erfindung beinhaltet mehrere ähnlichartige elektrisch miteinander verbundene Module (101 -124), die jeweils mindestens einen elektrischen Energiespeicher (202, 204, 206, 302, 304, 306) oder mindestens eine elektrische Energiespeichereinheit (1817) und mindestens zwei elektrische Schalter (213 - 317, 318 - 328; 1801, 1802, 1803, 1804, 1812, 1813, 1814, 1815) umfassen, die das Wechseln der Konnektivität des mindestens einen elektrischen Energiespeichers (202, 204, 206, 302, 304, 306) oder der mindestens einen Energiespeichereinheit (1817) gegenüber den Energiespeichern (202, 204, 206, 302, 304, 306) oder Energiespeichereinheiten (1817) anderer Module ermöglichen, derart beschaffen, dass mindestens ein Modul (101-124) eine elektrische Energiespeichereinheit (1817) umfasst, die mindestens zwei in elektrisch Serie geschaltete elektrische Energiespeicher (1806, 1807, 1808) umfasst, wobei jeder dieser elektrischen Energiespeicher (1806, 1807, 1808) ein Korrekturelement (1809, 1810, 1811; 2336; 2431 -2442; 2531, 2535, 2539; 2631, 2636, 2639) aufweist, das in der Lage ist, elektrische Ladung so aus der elektrischen Energiespeichereinheit (1817) abzuleiten und/oder in die elektrische Energiespeichereinheit (1817) hineinzuleiten, dass ein Teil der elektrischen Energiespeicher der elektrischen Energiespeichereinheit (1817) mit einem geringeren Strom belastet wird als die übrigen elektrischen Energiespeicher der Energiespeichereinheit (1817), wobei die mehreren Module als ähnlichartig gelten, wenn diese durch geeignete Aktivierung der jeweils mindestens zwei elektrischen Schalter (213 - 317, 318 - 328; 1801, 1802, 1803, 1804, 1812, 1813, 1814, 1815) mindestens die folgenden Schaltzustände darstellen können:
der mindestens eine elektrische Energiespeicher (202, 204, 206, 302, 304, 306) oder die mindestens eine elektrische Energiespeichereinheit (1817) eines Moduls wird mit dem mindestens einen elektrischen Energiespeicher (202, 204, 206, 302, 304, 306) oder der mindestens einen elektrischen Energiespeichereinheit (1817) eines weiteren Moduls in Serie geschaltet;
der mindestens eine elektrische Energiespeicher (202, 204, 206, 302, 304, 306) oder die mindestens eine elektrische Energiespeichereinheit (1817) eines Moduls wird derart gebypasst, dass der mindestens eine elektrische Energiespeicher (202, 204, 206, 302, 304, 306) oder die mindestens eine elektrische Energiespeichereinheit (1817) des Moduls nur mit maximal einem seiner mindestens zwei elektrischen Kontakte mit mindestens einem elektrischen Energiespeicher (202, 204, 206, 302, 304, 306) oder mindestens einer elektrischen Energiespeichereinheit (1817) eines weiteren Moduls elektrisch leitend verbunden ist und kein geschlossener Stromkreis mit mindestens einem elektrischen Energiespeicher (202, 204, 206, 302, 304, 306) oder mindestens einer elektrischen Energiespeichereinheit (1817) eines weiteren Moduls vorliegt.
Bevorzugter Weise erlauben mindestens zwei Module ferner zusätzlich einen Schaltzustand, bei welchem der mindestens eine elektrische Energiespeicher (202, 204, 206, 302, 304, 306) oder die mindestens eine elektrische Energiespeichereinheit (1817) eines Moduls wird mit dem mindestens einen elektrischen Energiespeicher (202, 204, 206, 302, 304, 306) oder der mindestens einen elektrischen Energiespeichereinheit (1817) eines weiteren Moduls parallel geschaltet;
In einer bevorzugten Ausführungsform ist mindestens ein Korrekturelement (1809, 1810, 1811) elektrisch parallel zu mindestens einem elektrischen Energiespeicher (1806, 1807, 1808) ausgeführt.

In einer weiteren bevorzugten Ausführungsform weist mindestens ein Korrekturelement mindestens einen elektrischen Schalter auf, der mindestens einen Verbindungsknoten mindestens zweier elektrischer Energiespeicher zeitweise elektrisch leitend mit mindestens einem Modulterminal verbinden kann.

In einer weiteren bevorzugten Ausführungsform begrenzt mindestens eines der Korrekturelemente (1809, 1810, 1811) die Spannung des mindestens einen dazu elektrisch parallel geschalteten Energiespeichers (1806, 1807, 1808) auf einen vorgegebenen Bereich. Für die genannte Begrenzung der Spannung kann die Erfindung beispielsweise eine spannungs- und/oder temperaturabhängige Impedanz umfassen.

In einer weiteren bevorzugten Ausführungsform weist mindestens eines der Korrekturelemente mindestens ein elektrisch steuerbares Element (1907, 1911, 1913, 2002, 2007, 2011, 2018, 2024) und mindestens eine Impedanz (1905, 1912, 2006, 2011, 2017) auf, wobei das mindestens eine elektrisch steuerbare Element (1907, 1911, 1913, 2002, 2007, 2011, 2018, 2024) als elektrischer Schalter mit mindestens zwei Zuständen, einem elektrisch gut leitenden und einem elektrisch schlecht leitenden, ausgeführt ist.

In einer besonders bevorzugten Ausführungsform ist das mindestens eine elektrisch steuerbare Element (1907, 1911, 1913, 2002, 2007, 2011, 2018, 2024) als elektrisch steuerbare Impedanz ausgeführt.

In einer weiteren bevorzugten Ausführungsform wird das mindestens eine elektrisch steuerbare Element (1907, 1911, 1913, 2002, 2007, 2011, 2018, 2024) durch eine elektronische Steuereinheit angesteuert.

In einer alternativen Ausführungsform wird das mindestens eine elektrisch steuerbare Element (1907, 1911, 1913, 2002, 2007, 2011, 2018, 2024) durch eine Schaltung gesteuert, die mindestens ein Impedanzelement enthält, das seine Impedanz aufgrund äußerer physikalischer oder chemischer Einwirkungen verändert.

In einer besonders bevorzugten Ausführungsform weist das mindestens eine Impedanzelement, das seine Impedanz aufgrund äußerer physikalischer oder chemischer Einwirkungen verändert, eine spannungsabhängige oder temperaturabhängige Impedanz auf. In einer weiteren bevorzugten Ausführungsform ist die elektronische Steuereinheit, die mindestens ein Korrekturelement (1809, 1810, 1811) einer elektrischen Energiespeichereinheit (1817) steuert oder regelt, mit der mindestens einen Ausgangsleitung mindestens eines Spannungssensors verbunden, der die Spannung mindestens eines elektrischen Energiespeichers (1806, 1807, 1808) der zugehörigen elektrischen Energiespeichereinheit (1817) detektiert.

In einer weiteren bevorzugten Ausführungsform ist die elektronische Steuereinheit, die mindestens ein Korrekturelement (1809, 1810, 1811) einer elektrischen Energiespeichereinheit (1817) steuert oder regelt, mit der mindestens einen Ausgangsleitung mindestens eines Temperatursensors verbunden, der die Temperatur mindestens eines elektrischen Energiespeichers (1806, 1807, 1808) der zugehörigen elektrischen Energiespeichereinheit (1817) detektiert.

## Patentansprüche

1. Elektrische Schaltung, die mehrere gleichartige elektrisch miteinander verbundene Module (101 - 124) umfasst, die jeweils mindestens einen elektrischen Energiespeicher (202, 204, 206, 302, 304, 306) oder mindestens eine elektrische Energiespeichereinheit (1817) und mindestens zwei elektrische Schalter (213 - 317, 318 - 328; 1801, 1802, 1803, 1804, 1812, 1813, 1814, 1815) aufweisen, die das Wechseln der Konnektivität des mindestens einen elektrischen Energiespeichers (202, 204, 206, 302, 304, 306) oder der mindestens einen Energiespeichereinheit (1817) gegenüber den Energiespeichern (202, 204, 206, 302, 304, 306) oder Energiespeichereinheiten (1817) anderer Module ermöglichen,
wobei die mehreren Module durch geeignete Aktivierung der jeweils mindestens zwei elektrischen Schalter (213 - 317, 318 - 328; 1801, 1802, 1803, 1804, 1812, 1813, 1814, 1815) von den folgenden drei Zuständen a), b) und c) mindestens die zwei Zustände a) und c) darstellen können:
a) der mindestens eine elektrische Energiespeicher (202, 204, 206, 302, 304, 306) oder die mindestens eine elektrische Energiespeichereinheit (1817) eines Moduls wird mit dem mindestens einen elektrischen Energiespeicher (202, 204, 206, 302, 304, 306) oder der mindestens einen elektrischen Energiespeichereinheit (1817) eines weiteren Moduls in Serie geschaltet;
b) der mindestens eine elektrische Energiespeicher (202, 204, 206, 302, 304, 306) oder die mindestens eine elektrische Energiespeichereinheit (1817) eines Moduls wird mit dem mindestens einen elektrischen Energiespeicher (202, 204, 206, 302, 304, 306) oder der mindestens einen elektrischen Energiespeichereinheit (1817) eines weiteren Moduls parallel geschaltet;
c) der mindestens eine elektrische Energiespeicher (202, 204, 206, 302, 304, 306) oder die mindestens eine elektrische Energiespeichereinheit (1817) eines Moduls wird derart gebypasst, dass der mindestens eine elektrische Energiespeicher (202, 204, 206, 302, 304, 306) oder die mindestens eine elektrische Energiespeichereinheit (1817) eines Modüls nur mit maximal einem seiner mindestens zwei elektrischen Kontakte mit mindestens einem elektrischen Energiespeicher (202, 204, 206, 302, 304, 306) oder mindestens einer elektrischen Energiespeichereinheit (1817) eines weiteren Moduls elektrisch leitend verbunden ist und kein geschlossener Stromkreis mit mindestens einem elektrischen Energiespeicher (202, 204, 206, 302, 304, 306) oder mindestens einer elektrischen Energiespeichereinheit (1817) eines weiteren Moduls vorliegt,
**dadurch gekennzeichnet,**
**dass** mindestens ein Modul (101 - 124) mindestens eine elektrische Energiespeichereinheit (1817) umfasst, wobei die elektrische Energiespeichereinheit (1817) mindestens zwei elektrisch in Serie geschaltete elektrische Energiespeicher (1806, 1807, 1808) aufweist, wobei jeder der elektrischen Energiespeicher (1806, 1807, 1808) der elektrischen Energiespeichereinheit elektrisch parallel mit einem zugehörigen Korrekturelement (1809, 1810, 1811; 2336; 2431 - 2442; 2531, 2535, 2539; 2631, 2636, 2639) verbunden ist, das dazu konfiguriert ist, elektrische Ladung so aus der Energiespeichereinheit (1817) abzuleiten und/oder in die Energiespeichereinheit (1817) hineinzuleiten, dass ein Teil der elektrischen Energiespeicher der Energiespeichereinheit (1817) von einem geringeren elektrischen Strom durchflossen wird als die übrigen elektrischen Energiespeicher der Energiespeichereinheit (1817), wobei mindestens eines der Korrekturelemente (1809, 1810, 1811) die Spannung des mindestens einen dazu elektrisch parallel verbundenen Energiespeichers (1806, 1807, 1808) auf einen vorgegebenen Bereich begrenzt, wobei jeder einzelne elektrische Energiespeicher (1806, 1807, 1808) durch weitere elektrische Energiespeicher (1806, 1807, 1808), die zu ersterem Energiespeicher (1806, 1807, 1808) elektrisch parallel geschaltet sind, verstärkt wird, wobei mindestens eines der Korrekturelemente (1809, 1810, 1811) Spannungsstress auf einen elektrischen Energiespeicher (1806, 1807, 1808) verringert, indem eine Spitzenspannung, die je über Anschlüsse des elektrischen Energiespeichers (1806, 1807, 1808) auftreten, unterhalb einer vorgegebenen Grenze gehalten wird, und wobei mindestens eines der Korrekturelemente eine spannungs- oder temperaturabhängige Impedanz aufweist.

2. Elektrische Schaltung nach Anspruch 1, wobei mindestens eines der Korrekturelemente mindestens ein elektrisch steuerbares Element (1907, 1911, 1913, 2002, 2007, 2011, 2018, 2024) wobei das mindestens eine elektrisch steuerbare Element (1907, 1911, 1913, 2002, 2007, 2011, 2018, 2024) als elektrischer Schalter mit mindestens zwei Zuständen, einem elektrisch gut leitenden und einem elektrisch schlecht leitenden, ausgeführt ist.

3. Elektrische Schaltung nach Anspruch 1, wobei mindestens eines der genannten Korrekturelemente mindestens einen elektrischen Schalter aufweist, der mindestens einen Verbindungsknoten mindestens zweier elektrischer Energiespeicher zeitweise elektrisch leitend mit mindestens einem Modulterminal verbinden kann.

4. Elektrische Schaltung nach einem der Ansprüche 1 bis 3, wobei die Schaltung ferner mindestens eine elektronische Steuereinheit umfasst.

5. Elektrische Schaltung nach Anspruch 4, wobei die mindestens eine elektronische Steuereinheit mindestens ein Korrekturelement ansteuert.

6. Elektrische Schaltung nach Anspruch 5, wobei die elektrische Schaltung ferner mindestens zwei Spannungssensoren umfasst, Welche die Spannung von elektrischen Energiespeichern detektieren und mindestens einer elektronischen Steuereinheit übermitteln.

7. Elektrische Schaltung nach Anspruch 4, wobei die elektronische Steuereinheit, die mindestens ein Korrekturelement (1809, 1810, 1811) einer elektrischen Energiespeichereinheit (1817) steuert, mit der mindestens einen Ausgangsleitung mindestens eines Temperatursensors verbunden ist, der die Temperatur mindestens eines elektrischen Energiespeichers (1806, 1807, 1808) der zugehörigen elektrischen Energiespeichereinheit (1817) detektiert.

## Claims

1. Electrical circuit that comprises multiple electrically interconnected modules (101 - 124) of the same type that each have at least one electrical energy store (202, 204, 206, 302, 304, 306) or at least one electrical energy storage unit (1817) and at least two electrical switches (213 - 317, 318 - 328; 1801, 1802, 1803, 1804, 1812, 1813, 1814, 1815) that allow the connectivity of the at least one electrical energy store (202, 204, 206, 302, 304, 306) or of the at least one energy storage unit (1817) in relation to the energy stores (202, 204, 206, 302, 304, 306) or energy storage units (1817) of other modules to be changed,
wherein the multiple modules can use suitable activation of the respective at least two electrical switches (213 - 317, 318 - 328; 1801, 1802, 1803, 1804, 1812, 1813., 1814, 1815) to represent at least the two states a) and c) of the following three states a), b) and c):
a) the at least one electrical energy store (202, 204, 206, 302, 304, 306) or the at least one electrical energy storage unit (1817) of a module is connected in series with the at least one electrical energy store (202, 204, 206, 302, 304, 306) or the at least one electrical energy storage unit (1817) of a further module;
b) the at least one electrical energy store (202, 204, 206, 302, 304, 306) or the at least one electrical energy storage unit (1817) of a module is connected in parallel with the at least one electrical energy store (202, 204, 206, 302, 304, 306) or the at least one electrical energy storage unit (1817) of a further module;
c) the at least one electrical energy store (202, 204, 206, 302, 304, 306) or the at least one electrical energy storage unit (1817) of a module is bypassed such that the at least one electrical energy store (202, 204, 206, 302, 304, 306) or the at least one electrical energy storage unit (1817) of a module has only no more than one of its at least two electrical contacts electrically conductively connected to at least one electrical energy store (202, 204, 206, 302, 304, 306) or at least one electrical energy storage unit (1817) of a further module and there is no completed circuit with at least one electrical energy store (202, 204, 206, 302, 304, 306) or at least one electrical energy storage unit (1817) of a further module,
**characterized in that**
at least one module (101 - 124) comprises at least one electrical energy storage unit (1817), wherein the electrical energy storage unit (1817) has at least two electrically series-connected electrical energy stores (1806, 1807, 1808), wherein each of these electrical energy stores (1806, 1807, 1808) of the electrical energy storage unit is electrically parallel-connected to an associated correction element (1809, 1810, 1811; 2336; 2431 - 2442; 2531, 2535, 2539; 2631, 2636, 2639) that is configured to draw off electrical charge from the energy storage unit (1817) and/or to direct electrical charge into the energy storage unit (1817), such that some of the electrical energy stores of the energy storage unit (1817) have a smaller electric current flowing through them than the other electrical energy stores of the energy storage unit (1817), wherein at least one of the correction elements (1809, 1810, 1811) limits the voltage of the at least one energy store (1806, 1807, 1808) electrically parallel-connected therewith to a prescribed range, wherein each individual electrical energy store (1806, 1807, 1808) is amplified by further electrical energy stores (1806, 1807, 1808) that are electrically parallel-connected to the first energy store (1806, 1807, 1808), wherein at least one of the correction elements (1809, 1810, 1811) reduces voltage stress on an electrical energy store (1806, 1807, 1808) by keeping a peak voltage that arises via each of the connections of the electrical energy store (1806, 1807, 1808) below a prescribed limit, and wherein at least one of the correction elements has a voltage-dependent or temperature-dependent impedance.

2. Electrical circuit according to Claim 1, wherein at least one of the correction elements has at least one electrically controllable element (1907, 1911, 1913, 2002, 2007, 2011, 2018, 2024), wherein the at least one electrically controllable element (1907, 1911, 1913, 2002, 2007, 2011, 2018, 2024) is embodied as an electrical switch having at least two states, one with good electrical conductivity and one with poor electrical conductivity.

3. Electrical circuit according to Claim 1, wherein at least one of said correction elements has at least one electrical switch that can intermittently electrically conductively connect at least one connecting node for at least two electrical energy stores to at least one module terminal.

4. Electrical circuit according to one of Claims 1 to 3, wherein the circuit further comprises at least one electronic control unit.

5. Electrical circuit according to Claim 4, wherein the at least one electronic control unit actuates at least one correction element.

6. Electrical circuit according to Claim 5, wherein the electrical circuit further comprises at least two voltage sensors that detect the voltage of electrical energy stores and transmit it to at least one electronic control unit.

7. Electrical circuit according to Claim 4, wherein the electronic, control unit, which controls at least one correction element (1809, 1810, 1811) of an electrical energy storage unit (1817), is connected to the at least one output line of at least one temperature sensor that detects the temperature of at least one electrical energy store (1806, 1807, 1808) of the associated electrical energy storage unit (1817).

## Revendications

1. Circuit électrique comprenant plusieurs modules (101 à 124) identiques, reliés électriquement les uns aux autres et qui présentent respectivement au moins un accumulateur d'énergie électrique (202, 204, 206, 302, 304, 306) ou au moins une unité de stockage d'énergie électrique (1817) et au moins deux commutateurs électriques (213 à 317, 318 à 328 ; 1801, 1802, 1803, 1804, 1812, 1813, 1814, 1815) qui permettent de changer la connectivité du au moins un accumulateur d'énergie électrique (202, 204, 206, 302, 304, 306) ou de ladite au moins une unité de stockage d'énergie (1817) par rapport aux accumulateurs d'énergie (202, 204, 206, 302, .304, 306) ou aux unités de stockage d'énergie (1817) d'autres modules,
dans lequel, grâce à une activation adéquate des respectivement au moins deux commutateurs électriques (213 à 317, 318 à 328 ; 1801, 1802, 1803, 1804, 1812, 1813, 1814, 1815), les plusieurs modules peuvent représenter au moins les deux états a) et c) parmi les trois états suivants a), b) et c) :
a) ledit au moins un accumulateur d'énergie électrique (202, 204, 206, 302, 304, 306) ou ladite au moins une unité de stockage d'énergie électrique (1817) d'un module est connecté(e) en série avec ledit au moins un accumulateur d'énergie électrique (202, 204, 206, 302, 304, 306) ou ladite au moins une unité de stockage d'énergie électrique (1817) d'un module supplémentaire ;
b) ledit au moins un accumulateur d'énergie électrique (202, 204, 206, 302, 304, 306) ou ladite au moins une unité de stockage d'énergie électrique (1817) d'un module est connecté(e) en parallèle avec ledit au moins un accumulateur d'énergie électrique (202, 204, 206, 302, 304, 306) ou ladite au moins unité de stockage d'énergie électrique (1817) d'un module supplémentaire ;
c) ledit au moins un accumulateur d'énergie électrique (202, 204, 206, 302, 304, 306) ou ladite au moins une unité de stockage d'énergie électrique (1817) d'un module est shunté(e) de telle sorte que ledit au moins un accumulateur d'énergie électrique (202, 204, 206, 302, 304, 306) ou ladite au moins une unité de stockage d'énergie électrique (1817) d'un module n'est relié(e) de manière électriquement conductrice qu'au maximum par l'un de ses au moins deux contacts électriques à au moins un accumulateur d'énergie électrique (202, 204, 206, 302, 304, 306) ou à au moins une unité de stockage d'énergie électrique (1817) d'un module supplémentaire, et qu'il n'existe aucun circuit électrique fermé avec au moins un accumulateur d'énergie électrique (202, 204, 206, 302, 304, 306) ou au moins une unité de stockage d'énergie électrique (1817) d'un module supplémentaire,
**caractérisé en ce qu'**au moins un module (101 à 124) comprend au moins une unité de stockage d'énergie électrique (1817), dans lequel l'unité de stockage d'énergie électrique (1817) présente au moins deux accumulateurs d'énergie électrique (1806, 1807, 1808) connectés électriquement en série, chacun des accumulateurs d'énergie électrique (1806, 1807, 1808) de l'unité de stockage d'énergie électrique étant connecté électriquement en parallèle avec un élément de correction associé (1809, 1810, 1811; 2336 ; 2431 à 2442 ; 2531, 2535, 2539; 2631, 2636, 2639) qui est configuré pour dériver une charge électrique de l'unité de stockage d'énergie (1817) et/ou de l'injecter dans l'unité de stockage d'énergie (1817) de telle sorte qu'une partie des accumulateurs d'énergie électrique de l'unité de stockage d'énergie (1817) est parcourue par un courant électrique plus faible que les autres accumulateurs d'énergie électrique de l'unité de stockage d'énergie (1817), dans lequel au moins l'un des éléments de correction (1809, 1810, 1811) limite à une plage prédéfinie la tension du au moins un accumulateur d'énergie (1806, 1807, 1808) relié électriquement en parallèle à ceux-ci, chaque accumulateur d'énergie électrique (1806, 1807, 1808) individuel étant renforcé par d'autres accumulateurs d'énergie électrique (1806, 1807, 1808) qui sont connectés électriquement en parallèle avec le premier accumulateur d'énergie (1806, 1807, 1808), au moins l'un des éléments de correction (1809, 1810, 1811) diminuant une contrainte de tension sur un accumulateur d'énergie électrique (1806, 1807, 1808) **en ce qu'**une tension de pointe qui survient respectivement aux connexions de l'accumulateur d'énergie électrique (1806, 1807, 1808) est maintenue au-dessous d'une limite prédéfinissable, et au moins l'un des éléments de correction présentant une impédance dépendant de la tension ou de la température.

2. Circuit électrique selon la revendication 1, dans lequel au moins l'un des éléments de correction présente au moins un élément pouvant être commandé électriquement (1907, 1911, 1913, 2002, 2007, 2011, 2018, 2024), ledit au moins un élément pouvant être commandé électriquement (1907, 1911, 1913, 2002, 2007, 2011, 2018, 2024) étant réalisé sous la forme d'un commutateur électrique ayant au moins deux états, à savoir un état bon conducteur d'électricité et un état mauvais conducteur d'électricité.

3. Circuit électrique selon la revendication 1, dans lequel au moins l'un desdits éléments de correction présente au moins un commutateur électrique qui peut relier de manière provisoirement électriquement conductrice au moins un nœud d'interconnexion d'au moins deux accumulateurs d'énergie électrique à au moins une borne de module.

4. Circuit électrique selon l'une quelconque des revendications 1 à 3, dans lequel le circuit comprend en outre une unité de commande électronique.

5. Circuit électrique selon la revendication 4, dans lequel ladite au moins une unité de commande électronique pilote au moins un élément de correction.

6. Circuit électrique selon la revendication 5, dans lequel le circuit électrique comprend en outre au moins deux capteurs de tension qui détectent la tension des accumulateurs d'énergie électrique et la transmettent à au moins une unité de commande électronique.

7. Circuit électrique selon la revendication 4, dans lequel l'unité de commande électronique commande au moins un élément de correction (1809, 1810, 1811) d'une unité de stockage d'énergie électrique (1817) à laquelle est reliée au moins une ligne de sortie d'au moins un capteur de température qui détecte la température d'au moins un accumulateur d'énergie électrique (1806, 1807, 1808) de l'unité de stockage d'énergie électrique (1817) associée.
